# EUROPÄISCHE PATENTSCHRIFT

(11) **EP 0 382 118 B1**
(45) Veröffentlichungstag und Bekanntmachung des Hinweises auf die Patenterteilung: **21.07.1993**
(21) Anmeldenummer: 90102101.4
(22) Anmeldetag: 02.02.1990
(51) Int. Cl.: A61C 19/05

(54) **Verfahren zur Vorbereitunng der Beseitigung eines Artikulationsfehlers an einem bezahnten menschlichen Kiefer eines Patienten**
Method for preparing the removal of a dental articulation fault in a human jaw
Procédé pour préparer l'élimination d'un défaut d'articulation à une mâchoire humaine pourvue de dents

(30) Priorität: 05.02.1989 DE 3903391
(43) Veröffentlichungstag der Anmeldung: 16.08.1990
(73) Patentinhaber: Schreinemakers, Josephus, Prof., NL-6026 BX Maarheeze (NL)
(72) Erfinder: Schreinemakers, Josephus, Prof., NL-6026 BX Maarheeze (NL)
(74) Vertreter: Andrejewski, Walter

(56) Entgegenhaltungen:
- CH-A- 473 578
- DD-A- 73 116
- DE-A- 2 805 889
- DE-B- 1 066 320

## Beschreibung

Die Erfindung betrifft ein Verfahren zur Vorbereitung der Beseitigung eines Artikulationsfehlers an einem bezahnten menschlichen Kiefer eines Patienten, wobei von dem bezahnten Oberkiefer, einschließlich der Tuberausläufe, sowie von dem bezahnten Unterkiefer des Patienten Abdrucke genommen sowie nach Maßgabe der Abdrucke ein aus einem Oberkieferteil und einem Unterkieferteil bestehendes Modell des Kiefers mit den Tuberausläufen gefertigt wird, und wobei das Modell unter Verwendung einer Meßplatte bearbeitet wird. Die Artikulationsebene wird auch als Kauebene bezeichnet. Der Ausdruck Artikulationsfehler bezeichnet die Tatsache, daß bei einem bezahnten menschlichen Oberkiefer und einem bezahnten menschlichen Unterkiefer ein Fehler in bezug auf die Artikulationsebene besteht. Die Lage der Artikulationsebene ist durch zwei Referenzgegebenheiten bestimmt. Das ist vorn der Lippenspalt, der dort das Niveau der Artikulationsebene andeutet. Das ist außerdem die Ohr/Nase-Ebene, der die Artikulationsebene parallel ist. Die Ohr/Nase-Ebene verbindet bekanntlich die Mittelpunkte der Ohrkanalöffnungen des Außenohres eines Menschen mit der unteren Grenze des Nasenflügels. Fehler in bezug auf die Artikulationsebene treten als pathologische Mißbildungen und unter anderem dann auf, wenn der Oberkiefer bzw. der Unterkiefer durch operative Eingriffe, einschließlich Extraktion von Zähnen, Verformungen ausgebildet hat, z. B. eine Extraktionslücke in einem Kiefer und im gegenüberliegenden Kiefer gleichsam komplementäre Ausbildungen aufweist. Solche Mißbildungen treten zunächst an singulären Stellen des Oberkiefers bzw. des Unterkiefers auf, werden sich aber im Laufe der Zeit als Disfunktionen bemerkbar machen, wenn sie bei der Prothetik mit Einbau von Kronen und Brücken nicht berücksichtigt und korrigiert werden. Um die Korrektur vorzubereiten, wird wie eingangs angegeben gearbeitet.

Im Rahmen der (aus der Praxis) bekannten Maßnahmen, von denen die Erfindung ausgeht, erfolgt die Ermittlung eines Artikulationsfehlers durch Augeninspektion des Modells oder man versucht eine Übertragung meßbarer Gegebenheiten eines Unterkiefers und/oder eines Oberkiefers auf einen individuell einstellbaren Artikulator, um mit dessen Hilfe zu korrigieren. Die Meßplatten sind im Rahmen der Erfindung keine ebenen Platten. Sie folgen gleichsam mit Verwindungen der Fläche, die die höchsten Punkte der Höcker der Molaren und Prämolaren verbindet bzw. tangiert. Die Erfindung schließt an die beschriebenen Maßnahmen, die mit einem Artikulator arbeiten, an. Es fehlt bei den bisher bekannten Maßnahmen die Möglichkeit, die mit Hilfe des Artikulators ermittelten Fehler im Mund genauso kunstgerecht zu beseitigen. Im Rahmen der bekannten Maßnahmen sind wegen der fehlenden Rückkopplung der im Artikulator erworbenen Kenntnisse in Richtung natürlicher Zahnbögen Korrekturfehler beim Schleifen der natürlichen Zähne mit ihren Langzeitfolgen nicht ganz zu vermeiden. Das gilt auch dann, wenn man am Patienten bei der Herstellung von Brücken, Kronen u. dgl. zur Ermittlung eines Artikulationsfehlers mit Artikulationspapier oder ähnlichen spurenbildenden Hilfsmitteln arbeitet, die bei der Artikulationsbewegung des Unterkiefers gegen den Oberkiefer an den Zähnen des Patienten Spuren hinterlassen.

Der Erfindung liegt die Aufgabe zugrunde, ein Verfahren anzugeben, mit dem die Beseitigung von Artikulationsfehlern an einem bezahnten menschlichen Kiefer eines Patienten auf einfache Weise vorbereitet werden kann, und zwar derart, daß der Artikulationsfehler sehr genau ermittelt und in der Folge auch sehr genau berücksichtigt und korrigiert werden kann. Zur Lösung dieser Aufgabe lehrt die Erfindung, daß
a) am Patienten das Niveau des Lippenspaltes sowie die Ohr/Nase-Ebene ermittelt und an dem Oberkieferteil des Modells markiert werden,
b) an dem Oberkieferteil des Modells die Schneidzähne nach Maßgabe der Markierung des Lippenspaltes abgeschliffen oder mit Zusatzstoff aufgebaut werden, so daß die Unterkante der Schneidzähne mit dem Lippenspalt übereinstimmt,
c) auf das gemäß b) eingerichtete Oberkieferteil des Modells eine aus einem Hilfsmeßplattensatz von unterschiedlich großen Hilfsmeßplatten passend ausgewählte Hilfsmeßplatte parallel zur Ohr/Nase-Ebene aufgesetzt wird,
   welche Hilfsmeßplatte im Bereich der Seitenzähne Abdruckausnehmungen aufweist, die von den Seitenzähnen durchfaßbar sind und welche Hilfsmeßplatte an ihrem rachenseitigen Rand eine Tuberleiste aufweist, deren Leistenhöhe bis auf die zugeordneten Tuberausläufe reicht,
   wobei die Hilfsmeßplatte an den eingerichteten Schneidzähnen und mit der Tuberleiste an den Tuberausläufen anliegt und so die Sollorientierung für die Artikulationsebene festlegt,
d) die Abdruckausnehmungen in der Hilfsmeßplatte unter Einbettung der zugeordneten Zähne mit Wachs ausgefüllt werden und auf die freie Wachsoberfläche, parallel zur Seitenkante der Hilfsmeßplatte, eine Bißgabel aufgeklebt wird,
e) die Bißgabel mit dem Wachs in den Mund des Patienten eingeführt und mit den Wachsabdrucken auf die Zähne aufgesetzt sowie festgestellt wird, ob die Bißgabel parallel zur Ohr/Nase-Ebene des Patienten verläuft, wobei verneinendenfalls die Maßnahmen c) und d) mit einer besser passenden Hilfsmeßplatte wiederholt werden, bis die verlangte Parallelität zwischen Ohr/Nase-Ebene und Hilfsmeßplatte erreicht wird,
f) danach aus einem mit dem Hilfsmeßplattensatz korrespondierenden Satz von Meßplatten, die den Tuberleisten der Hilfsmeßplatten entsprechende Tuberleisten aufweisen, die der passenden Hilfsmeßplatte entsprechende Meßplatte ausgewählt und nach Maßgabe dieser Meßplatte das Modell beschliffen und dadurch am Modell der Artikulationsfehler beseitigt wird.

Im Anschluß daran kann ein entsprechendes Beschleifen der Zähne im Kiefer des Patienten durchgeführt und dadurch die Artikulationsfehler beseitigt werden. Es besteht die Möglichkeit, nach dem Beschleifen am Modell zwischen den Zahnreihen des Oberkieferteils bzw. des Unterkieferteils in den entstandenen freien Raum eine Art Schablone, z. B. aus Kunststoff, zu fertigen, die im Anschluß daran in den Mund des Patienten eingeführt und benutzt wird, um die Korrektur an den natürlichen Zähnen des Patienten durchzuführen. Es versteht sich, daß im Rahmen der erfindungsgemäßen Maßnahmen erforderlichenfalls im Seitenzahnbereich Korrekturschliffe an dem Modell vorgenommen werden. Es versteht sich fernerhin, daß mit einer im Sinne der Lehre der Erfindung gut passenden Hilfsmeßplatte und einer gut passenden Meßplatte gearbeitet werden muß. Sie sind aus einem zur Erfindung gehörenden Hilfsmeßplattensatz bzw. Meßplattensatz, die noch beschrieben werden, entsprechend auszuwählen. Erfindungsgemäß gibt es so für jede Meßplatte eine übereinstimmende Hilfsmeßplatte. Von Bedeutung ist, daß die Hilfsmeßplatten im Bereich der Seitenzähne Abdruckausnehmungen aufweisen. Die Hilfsmeßplatten sind deswegen leicht entsprechend der Sollorientierung auf das wie beschrieben eingerichtete Modell aufsetzbar, wenn die Parallelität zur Ohr/Nase-Ebene vorher, wie bereits beschrieben, am Modell markiert ist. Im Bereich der Abdruckausnehmungen werden von den Zahnausformungen Wachsabdrücke genommen. Anschließend wird wie beschrieben, die Bißgabel aufgeklebt. Anschließend werden diese Abdrücke im Mund des Patienten den Kauflächen der natürlichen Zähne aufgedrückt und der Verlauf der Bißgabel wird wie beschrieben mit der sogenannten Ohr/Nase-Ebene auf Parallelität geprüft. Die Ohr/Nase-Ebene verläuft parallel zur Artikulationsebene und wird im Rahmen der Erfindung in der beschriebenen Weise zur Kontrolle herangezogen.

Man kann auf verschiedene Weise sicherstellen, daß am Oberkieferteil bzw. am Unterkieferteil des Modells die Meßplatte und die Hilfsmeßplatte ausreichend parallel zur Ohr/Nase-Ebene verlaufen. Zum Beispiel kann mit Hilfe einer Bißgabel und mit Wachs im Munde des Patienten ein Abdruck genommen werden. Dieser Abdruck wird durch ausreichend Wachs in der Bißgabel und ausreichende Wachsverdrängung so eingerichtet, daß der Abdruck im Munde des Patienten so liegt, daß die ebene Bißgabel mit der Ohr/Nase-Ebene erkennbar übereinstimmt. Der so eingerichtete, mit der orientierten Bißgabel im Munde des Patienten hergestellte Abdruck wird nunmehr auf das Modell aufgesetzt und es wird mit einem Bleistift angezeichnet, wie am Modell die Ebene verläuft, die der Ohr/Nase-Ebene parallel ist. Es sind jedoch auch andere Methoden zur Ermittlung der Ohr/Nase-Ebene und zur Markierung der zur Ohr/Nase-Ebene parallelen Ebene am Modell möglich. Insbesondere können verschiedene Meßplatten ausprobierend zur Festlegung der Ohr/Nase-Ebene verwendet werden.

Im einzelnen verfährt man im Rahmen der Erfindung regelmäßig so, daß die beschriebenen Maßnahmen am Oberkiefer oder zuerst am Oberkiefer und damit am Oberkieferteil des Modells durchgeführt werden. Gegenstand der Erfindung ist jedoch auch ein Verfahren mit den eingangs beschriebenen grundsätzlichen Maßnahmen, jedoch mit der Maßgabe, daß die im Patentanspruch 1 beanspruchten Maßnahmen entsprechend am Oberkieferteil des Modells und anschließend am Unterkieferteil des Modells durchgeführt werden. Zur Erfindung gehört, daß mit einem Satz von Hilfsmeßplatten und mit einem Satz von Meßplatten gearbeitet wird, die bis auf die Abdruckausnehmungen übereinstimmen, wobei deren Tuberleisten im Satz unterschiedliche, von Platte zu Platte zunehmende oder abnehmende Leistenhöhe aufweisen, und durch Probieren so ausgewählt werden, daß die beschriebene Parallelität zur Ohr/Nase-Ebene besteht. Der Abstand zwischen der Artikulationsebene und den Tuberausläufen ist individuell verschieden, schwankt aber lediglich im Bereich von 1 bis 12 mm. Aus diesem Grunde sind im Rahmen der Erfindung Meßplatten und Hilfsmeßplatten mit unterschiedlich hohen Tuberleisten erforderlich.

Die Erfindung bringt gegenüber den bekannten Maßnahmen eine beachtliche Vereinfachung und Verbesserung. Sie führt in die Ermittlung eines Fehlers zur Artikulationsebene eines Patienten eine neue Bezugsgröße ein, nämlich die Sollorientierung der Hilfsmeßplatte bzw. danach der Meßplatte, die an dem Modell durch Abschleifen von Zahnausformungen eingerichtet wird. Dabei nutzt die Erfindung die Erkenntnis, daß einerseits die Abstützung der Meßplatte auf den Tuberausläufen des Modells mit Hilfe einer ausreichend hohen Tuberleiste an der Hilfsmeßplatte bzw. an der Meßplatte, andererseits der Lippenspalt die ideale Artikulationsebene des jeweiligen Patienten ausreichend genau festlegen. Das erlaubt nach der Lehre der Erfindung eine ziemlich genaue Feststellung der Fehler zur Artikulationsebene und anschließend in der schon angegebenen Weise deren Beseitigung. Es versteht sich, daß im Bedarfsfall im Zusammenhang mit dem Merkmal f) anstelle des Abschleifens auch ein Aufbau der Zähne erfolgen kann, z. B. durch Wachsmodellierung.

Im einzelnen ist zur Theorie und Technologie der erfindungsgemäßen Lehre folgendes zu erläutern und festzuhalten: Die Hilfsmeßplatten und Meßplatten, mit denen im Rahmen der Erfindung gearbeitet wird, besitzen eine gekrümmte Oberfläche, deren Kurvatur eine sehr starke Ähnlichkeit aufweist mit derjenigen Fläche, welche die höchsten Punkte der Höcker auf den Kauflächen der Molaren und Prämolaren tangiert. Eine imaginäre Verlängerung dieser Fläche schneidet, in Vorwärtsrichtung, unabhängig von der Position der Frontzähne, mit dem Lippenspalt ab. Das bedeutet, daß der Lippenspalt eine Orientierung darstellt für die Lage des vorderen Abschnittes der Meßplatte bzw. der Hilfsmeßplatte. Ein bekanntes Gesetz sagt, daß die Ohr/Nase-Ebene (die sogenannte Campersche Ebene) und die Lage der Artikulationsebene sehr parallel zueinander sind. Die Krümmung der Meßplatte und die der Artikulationsebene sind identisch. Beide zeigen im posterioren Bereich eine betonte Krümmung, und zwar im Bereich des zweiten und dritten Molaren durch eine verstärkte Kranialwärtsbewegung der Kurvatur. Diese letzte Krümmung im Bereich des zweiten und dritten Molaren wird beim Feststellen der Parallelität zwischen der Artikulationsebene und der Ohr/Nase-Ebene regelmäßig vernachlässigt. Bei der Meßplatte bzw. der Hilfsmeßplatte ist die Vernachlässigung miteinbezogen, der laterale Rand auf der Rückseite der Meßplatte bzw. der Hilfsmeßplatte verläuft in sagittaler Richtung vor der Prämolar- und ersten Molargegend aus in geraden Linien nach hinten. Die Position dieser geraden Linie wird erfahrungsgemäß auf die Bißgabel übertragen. Anschließend überprüft man im Munde des Patienten, ob die Bißgabel parallel zur Ohr/Nase-Ebene verläuft. Der Abstand zwischen dem höchsten Punkt der Tuberausläufe und der Artikulationsebene schwankt, wie bereits erwähnt, von 1 bis 12 mm von einem Patienten zum anderen. Für jeden individuellen Fall muß man daher bei Anwendung des erfindungsgemäßen Verfahrens über eine Meßplatte und eine Hilfsmeßplatte verfügen können, welche nach dem Einschleifen in Verbindung mit den Höckern der Molaren und der Prämolaren liegt. Dazu muß die Platte, im posterioren Bereich, mit der Tuberleiste so versehen sein, daß diese auf dem Zentrum der Tuberausläufe aufliegt. Gegenstand der Erfindung sind auch Hilfsmeßplattensätze und Meßplattensätze entsprechend den Patentansprüchen 4 und 5.

Im folgenden wird die Erfindung anhand einer lediglich ein Ausführungsbeispiel darstellenden Zeichnung ausführlicher erläutert. Es zeigen
Fig. 1 einen Sagittalschnitt durch das Modell eines bezahnten menschlichen Oberkiefers eines Patienten mit angelegter Meßplatte,
Fig. 2 eine Ansicht des Gegenstandes der Fig. 1 von unten,
Fig. 3 perspektivisch die Meßplatte aus dem Gegenstand nach Fig. 1 und
Fig. 4 perspektivisch die der Meßplatte der Fig. 3 entsprechende Hilfsmeßplatte.

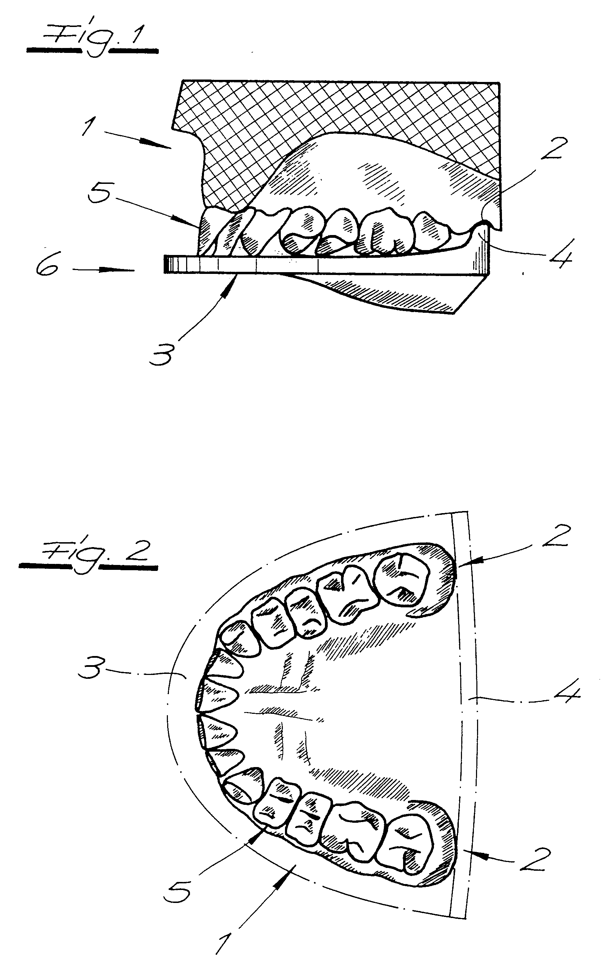

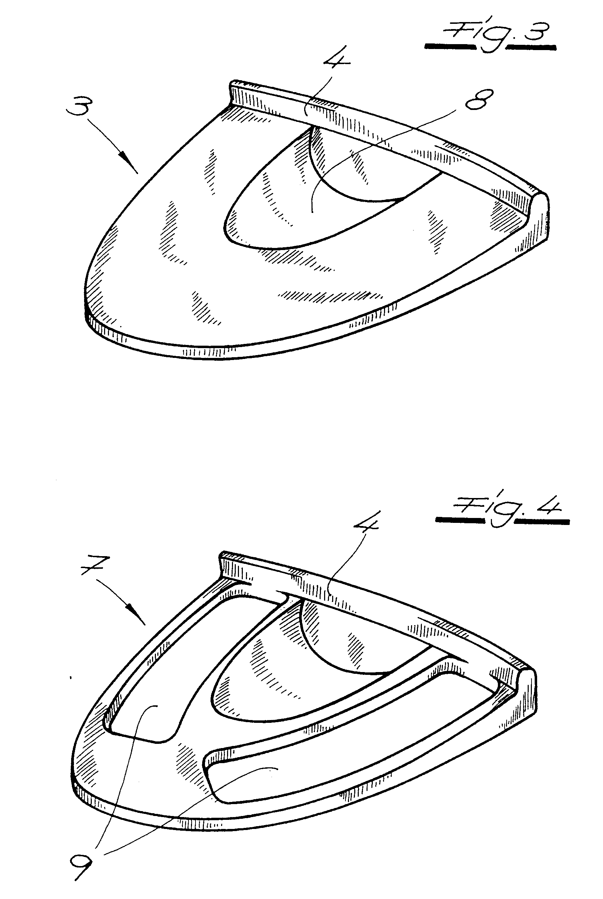

In den Fig. 1 und 2 erkennt man das Modell 1 eines bezahnten menschlichen Oberkiefers eines Patienten. Dabei wurde von dem Oberkiefer 1 mit Hilfe eines Abdrücklöffels und einer erhärtbaren Abdruckmasse zunächst ein negativer Abdruck genommen und danach das dargestellte positive Modell 1 des Oberkiefers gefertigt. Das Modell 1 des Oberkiefers wurde so gefertigt, daß an den beiden rachenseitigen Enden wohl ausgeformte Tuberausläufe 2 ausgebildet sind. Man erkennt im übrigen eine Meßplatte 3, die an ihrem rachenseitigen Rand eine Tuberleiste 4 ausreichender Leistenhöhe aufweist. Die oben beschriebene Verwölbung oder Verwindung wurde nicht dargestellt. Die Meßplatte 3 ist bei dem Gegenstand nach den Fig. 1 und 2 mit ihrer Tuberleiste 4 auf die Tuberausläufe 2 und im übrigen auf die Zahnausformungen 5 des Modells 1 aufgedrückt worden. Die Darstellung in der Fig. 1 wurde so gewählt, daß die, wie vorstehend angegeben, festgelegte Meßplatte 3 in der horizontalen Seitenansicht auch in dem zuvor gegenüber dem Modell 1 festgelegten Lippenspalt 6 des Patienten liegt. Bei einer Abweichung nach oben bzw. unten würde die Meßplatte 3 eine schräge Lage einnehmen. Wäre eine solche Abweichung der Meßplatte 3 von der einerseits durch das Auflager der Tuberleiste 4 auf den Tuberausläufen 2, andererseits durch den Lippenspalt 6 vorgegebenen mit der idealen Artikulationsebene des Patienten übereinstimmenden Sollorientierung vorhanden, so würden die diese Abweichung bedingten Zahnausformungen 5 des Modells 1 abgeschliffen oder aufgebaut, bis die Meßplatte 3 die in Fig. 1 gezeichnete Sollorientierung einnimmt. Danach wird in der schon beschriebenen Art und Weise unter Verwendung einer Hilfsplatte 7 und unter Abdrucknahme weiterverfahren.

In der Fig. 3 erkennt man die Meßplatte 3, die mit der in Fig. 1 gezeichneten übereinstimmen mag. Sie wurde als im wesentlichen ebene Platte gezeichnet, in der Praxis sind die Meßplatten 3 jedoch mit den Verwindungen versehen, die die Artikulationsebene eines Menschen üblicherweise aufweist.

Eine umgekehrte Gaumenkuppel 8 wurde angedeutet. Die in Fig. 3 dargestellte Meßplatte 3 gehört einem Meßplattensatz für die Durchführung des beschriebenen Verfahrens an, dessen einzelne Meßplatten unterschiedlichen Oberkiefergrößen angepaßt sind. In dem Meßplattensatz sind die Tuberleisten 4 der einzelnen Meßplatten 3 mit unterschiedlicher Leistenhöhe ausgerüstet und zwar von Meßplatte zu Meßplatte mit jeweils 1 mm oder 2 mm Unterschied. Auch Zwischenwerte sind möglich.

Die in der Fig. 4 dargestellte Hilfsmeßplatte 7 gehört einem entsprechenden Hilfsmeßplattensatz an und ist regelmäßig ebenfalls nach Maßgabe der Verbindung der Artikulationsebene eines Menschen ein wenig verwunden. Sie ist mit Abdruckausnehmungen 9 versehen.

## Patentansprüche

1. Verfahren zur Vorbereitung der Beseitigung eines Artikulationsfehlers an einem bezahnten menschlichen Kiefer eines Patienten,
wobei von dem bezahnten Oberkiefer, einschließlich der Tuberausläufe, sowie von dem bezahnten Unterkiefer eines Patienten Abdrucke genommen sowie nach Maßgabe der Abdrucke ein aus einem Oberkieferteil und einem Unterkieferteil bestehendes Modell des Kiefers mit den Tuberausläufen gefertigt wird,
und wobei das Modell unter Verwendung einer Meßplatte bearbeitet wird, dadurch gekennzeichnet, daß
a) am Patienten das Niveau des Lippenspaltes sowie die Ohr/Nase-Ebene ermittelt und an dem Oberkieferteil des Modells markiert werden,
b) an dem Oberkieferteil des Modells die Schneidzähne nach Maßgabe der Markierung des Lippenspaltes abgeschliffen oder mit Zusatzstoff aufgebaut werden, so daß die Unterkante der Schneidzähne mit dem Lippenspalt übereinstimmt,
c) auf das gemäß b) eingerichtete Oberkieferteil des Modells eine aus einem Hilfsmeßplattensatz von unterschiedlich großen Hilfsmeßplatten passend ausgewählte Hilfsmeßplatte parallel zur Ohr/Nase-Ebene aufgesetzt wird,
welche Hilfsmeßplatte im Bereich der Seitenzähne Abdruckausnehmungen aufweist, die von den Seitenzähnen durchfaßbar sind und welche Hilfsmeßplatte an ihrem rachenseitigen Rand eine Tuberleiste aufweist, deren Leistenhöhe bis auf die zugeordneten Tuberausläufe reicht,
wobei die Hilfsmeßplatte an den eingerichteten Schneidzähnen und mit der Tuberleiste an den Tuberausläufen anliegt und so die Sollorientierung für die Artikulationsebene festlegt,
d) die Abdruckausnehmungen in der Hilfsmeßplatte unter Einbettung der zugeordneten Zähne mit Wachs ausgefüllt werden und auf die freie Wachsoberfläche, parallel zur Seitenkante der Hilfsmeßplatte, eine Bißgabel aufgeklebt wird,
e) die Bißgabel mit dem Wachs in den Mund des Patienten eingeführt und mit den Wachsabdrucken auf die Zähne aufgesetzt sowie festgestellt wird, ob die Bißgabel parallel zur Ohr/Nase-Ebene des Patienten verläuft, wobei verneinendenfalls die Maßnahmen c) und d) mit einer besser passenden Hilfsmeßplatte wiederholt werden, bis die verlangte Parallelität zwischen Ohr/Nase-Ebene und Hilfsmeßplatte erreicht wird und
f) danach aus einem mit dem Hilfsmeßplattensatz korrespondierenden Satz von Meßplatten, die den Tuberleisten der Hilfsmeßplatte entsprechende Tuberleisten aufweisen, die der passenden Hilfsmeßplatte entsprechende Meßplatte ausgewählt und nach Maßgabe dieser Meßplatte das Modell beschliffen und dadurch am Modell der Artikulationsfehler beseitigt wird.

2. Verfahren zur Vorbereitung der Beseitigung eines Artikulationsfehlers an einem bezahnten menschlichen Kiefer eines Patienten,
wobei von dem bezahnten Oberkiefer, einschließlich der Tuberausläufe, sowie von dem bezahnten Unterkiefer des Patienten Abdrucke genommen sowie nach Maßgabe der Abdrucke ein aus einem Oberkieferteil und einem Unterkieferteil bestehendes Modell des Kiefers mit den Tuberausläufen gefertigt wird
und wobei das Modell unter Verwendung einer Meßplatte bearbeitet wird, mit der Maßgabe, daß die im Patentanspruch 1 beschriebenen Maßnahmen entsprechend am Oberkieferteil des Modells und anschließend am Unterkieferteil des Modells durchgeführt werden.

3. Verfahren nach einem der Ansprüche 1 oder 2, dadurch gekennzeichnet, daß mit einem Satz von Hilfsmeßplatten und mit einem Satz von Meßplatten gearbeitet wird, die bis auf die Abdruckausnehmungen übereinstimmen, wobei deren Tuberleisten im Satz unterschiedliche, von Platte zu Platte zunehmende oder abnehmende Leistenhöhe aufweisen, und durch Probieren so ausgewählt werden, daß die beschriebene Parallelität zur Ohr/Nase-Ebene besteht.

4. Meßplattensatz für die Durchführung des Verfahrens nach einem der Ansprüche 1 bis 3, welcher unterschiedlichen Oberkiefergrößen bzw. Unterkiefergrößen angepaßt ist und bei dem die Tuberleisten von Meßplatte zu Meßplatte eine um jeweils 1 mm oder 2 mm unterschiedliche Leistenhöhe aufweisen.

5. Hilfsmeßplattensatz für die Durchführung des Verfahrens nach einem der Ansprüche 1 bis 3, welcher unterschiedlichen Oberkiefergrößen bzw. Unterkiefergrößen angepaßt ist und bei dem die Tuberleisten der einzelnen Hilfsmeßplatten von Hilfsmeßplatte zu Hilfsmeßplatte um jeweils 1 mm oder 2 mm unterschiedliche Leistenhöhe aufweisen.

## Claims

1. A method of preparing for the removal of an articulation defect on a dentary human jaw of a patient, wherein impressions are taken of the dentary upper jaw, including the tuberous excursions, and from the dentary lower jaw of a patient, and a model of the jaw with the tuberous excursions, consisting of an upper jaw part and a lower jaw part, is produced according to the impressions, and wherein the model is worked using a measuring plate, characterised in that
a) the level of the gap between the lips and the ear/nose plane are determined on the patient and marked on the upper jaw part of the model,
b) the incisors are ground away or built up with additional material on the upper jaw part of the model according to the marking of the gap between the lips, so that the lower edge of the incisors corresponds to the gap between the lips,
c) a matching auxiliary measuring plate, which is selected from a set of auxiliary measuring plates comprising auxiliary measuring plates of different sizes, is placed parallel to the ear/nose plane on the upper jaw part of the model adjusted in accordance with b), which measuring plate has impression recesses in the region of the lateral teeth which can be traversed by the lateral teeth, and which auxiliary measuring plate has a tuber strip on its edge on the pharyngeal side, the height of which strip extends to the associated tuberous excursions, wherein the auxiliary measuring plate is seated against the adjusted incisors and its tuber strip is seated against the tuberous excursions, and thus determines the desired orientation for the articulation plane,
d) the impressions in the auxiliary measuring plate are filled with wax with the associated teeth being embedded, and a bite plate is adhesively bonded to the free surface of the wax, parallel to the lateral edge of the auxiliary measuring plate,
e) the bite plate with the wax is introduced into the patient's mouth and is placed with the wax impressions on the teeth, and it is determined whether the bite plate runs parallel to the patient's ear/nose plane, wherein if the answer is negative steps c) and d) are repeated with an auxiliary measuring plate which is a better match, until the desired parallelism between the ear/nose plane and the auxiliary measuring plate is achieved, and
f) thereafter the measuring plate corresponding to the matching auxiliary measuring plate is selected from a set of measuring plates which correspond to the set of auxiliary measuring plates and which have tuber strips corresponding to the tuber strips of the auxiliary measuring plate, and the model is ground away in accordance with this measuring plate and by this means the articulation defect is removed on the model.

2. A method of preparing for the removal of an articulation defect on a dentary human jaw of a patient, wherein impressions are taken of the dentary upper jaw, including the tuberous excursions, and from the dentary lower jaw of a patient, and a model of the jaw with the tuberous excursions, consisting of an upper jaw part and a lower jaw part with the tuberous excursions is produced according to the impressions, and wherein the model is worked using a measuring plate, with the proviso that the steps described in claim 1 are correspondingly carried out on the upper jaw part of the model and subsequently on the lower jaw part of the model.

3. A method according to one of claims 1 or 2, characterised in that a set of auxiliary measuring plates and a set of measuring plates are employed which correspond apart from the impression recesses, wherein their tuber strips in the set have different strip heights which increase or decrease from plate to plate, and are selected by trial and error so that the described parallelism to the ear/nose plate is produced.

4. A set of measuring plates for carrying out the method according to any one of claims 1 to 3, which is adapted to different upper jaw sizes or lower jaw sizes and in which the tuber strips have a strip height which differs by 1 mm or 2 mm each time from measuring plate to measuring plate.

5. A set of auxiliary measuring plates for carrying out the method according to any one of claims 1 to 3, which is adapted to different upper jaw sizes or lower jaw sizes and in which the tuber strips of the individual auxiliary measuring plates have a strip height which differs by 1 mm or 2 mm each time from auxiliary measuring plate to auxiliary measuring plate.

## Revendications

1. Procédé pour préparer l'élimination d'un défaut d'articulation sur une mâchoire humaine, pourvue de dents, d'un patient,
selon lequel on prélève des empreintes de la mâchoire supérieure pourvue de dents, y compris les saillies maxillaires terminales, ainsi que de la mâchoire inférieure pourvue de dents d'un patient et, en fonction des empreintes, on fabrique un modèle, qui est constitué par une partie relative à la mâchoire supérieure et une partie relative à la mâchoire inférieure, de la mâchoire y compris les saillies maxillaires terminales, et
selon lequel on traite le modèle en utilisant une plaque de mesure,
caractérisé par le fait que
a) sur le patient, on détermine le niveau de la fente des lèvres ainsi que le plan oreille/nez et on le marque sur la partie du modèle relative à la mâchoire supérieure,
b) sur la partie du modèle relative à la mâchoire supérieure, on meule les incisives en fonction du marquage de la fente des lèvres ou on les forme avec un matériau supplémentaire de manière que le bord inférieur des incisives coïncide avec la fente des lèvres,
c) sur la partie du modèle relative à la mâchoire supérieure, agencée conformément à b), on installe, parallèlement au plan oreille/nez, une plaque de mesure auxiliaire sélectionnée de façon adaptée parmi un ensemble de plaques de mesure auxiliaires ayant des tailles différentes,
laquelle plaque de mesure auxiliaire possède au niveau des dents latérales, des évidements d'empreinte, dans lesquels peuvent s'insérer les dents latérales, et possède, sur son bord situé du côté du pharynx, une barrette associée aux saillies maxillaires terminales, qui s'étend en hauteur jusqu'aux saillies maxillaires terminales associées,
la plaque de mesure auxiliaire s'appliquant contre les incisives orientées et, par la barrette de tuber, sur les sorties associées aux saillies maxillaires terminales et fixant ainsi l'orientation de consigne pour le plan d'articulation,
d) on remplit avec de la cire les évidements de l'empreinte dans la plaque de mesure auxiliaire tout en insérant les dents associées et on colle une palette à mordre, sur la surface libre de la cire, parallèlement au bord latéral de la plaque de mesure auxiliaire,
e) on introduit la palette à mordre ainsi que la cire dans la bouche du patient et on l'applique avec les empreintes en cire sur les dents et on détermine si la palette à mordre est parallèle au plan oreille/nez du patient, et si ce n'est pas le cas, les dispositions c) et d) sont réitérées avec une plaque de mesure auxiliaire mieux adaptée, jusqu'à ce que le parallélisme requis soit atteint entre le plan oreille/nez et la plaque de mesure auxiliaire, et
f) ensuite, on sélectionne la plaque de mesure qui correspond à la plaque de mesure auxiliaire adaptée, parmi un ensemble de plaques de mesure, qui correspond à l'ensemble de plaques de mesure auxiliaires et possèdent des barrettes associées aux saillies maxillaires terminales qui correspondent aux barrettes associées aux saillies maxillaires terminales de la plaque de mesure auxiliaire, et, en fonction de cette plaque de mesure, on polit le modèle et on élimine de ce fait un défaut d'articulation sur le modèle.

2. Procédé pour préparer l'élimination d'un défaut d'articulation sur une mâchoire humaine, pourvue de dents, d'un patient,
selon lequel on prélève des empreintes de la mâchoire supérieure pourvue de dents, y compris les saillies maxillaires tubulaires, ainsi que de la mâchoire inférieure pourvue de dents d'un patient et, en fonction des empreintes, on fabrique un modèle, qui est constitué par une partie relative à la mâchoire supérieure et une partie relative à la mâchoire inférieure, de la mâchoire y compris les sorties tubulaires, et
selon lequel on traite le modèle en utilisant une plaque de mesure, moyennant la mise en oeuvre des dispositions décrites dans la revendication 1, de façon correspondante, au niveau de la partie du modèle relative à la mâchoire supérieure, puis au niveau de la partie du modèle relative à la mâchoire inférieure.

3. Procédé selon l'une des revendications 1 ou 2, caractérisé en ce qu'on travaille avec un ensemble de plaques de mesure auxiliaires et avec un ensemble de plaques de mesure, qui coïncident hormis au niveau des évidements d'empreinte, et que leurs barrettes associées aux saillies maxillaires terminales possèdent des hauteurs différentes dans l'ensemble de barrettes, qui augmentent ou diminuent d'une plaque à la suivante, et on sélectionne les plaques de mesure auxiliaires en les testant de manière à obtenir le parallélisme indiqué avec le plan oreille/nez.

4. Ensemble de plaques de mesure pour la mise en oeuvre du procédé selon l'une des revendications 1 à 3, qui est adapté à des tailles différentes de mâchoires supérieures et à des tailles différentes de mâchoires inférieures et dans lequel les barrettes associées aux saillies maxillaires terminales possèdent une hauteur qui diffère respectivement de 1 mm ou 2 mm d'une plaque de mesure à une autre.

5. Ensemble de plaques de mesure auxiliaires pour la mise en oeuvre du procédé selon l'une des revendications 1 à 3, qui est adapté à différentes tailles de mâchoires supérieures et à différentes tailles de mâchoires inférieures et dans lequel les barrettes de tuber des différentes plaques de mesure auxiliaires possèdent une hauteur qui diffère respectivement de 1 mm ou 2 mm d'une plaque de mesure auxiliaire à la suivante.
